(19) Europäisches Patentamt
European Patent Office
Office européen des brevets

(11) **EP 3 406 921 A1**

(12) **EUROPEAN PATENT APPLICATION**
published in accordance with Art. 153(4) EPC

(43) Date of publication:
**28.11.2018 Bulletin 2018/48**

(51) Int Cl.:
**F16C 11/06** (2006.01)   **H05B 6/06** (2006.01)
**H05B 6/10** (2006.01)   **H05B 6/36** (2006.01)
**H05B 6/44** (2006.01)   **B60G 7/02** (2006.01)

(21) Application number: **17741380.4**

(22) Date of filing: **17.01.2017**

(86) International application number:
**PCT/JP2017/001409**

(87) International publication number:
**WO 2017/126502 (27.07.2017 Gazette 2017/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.01.2016 JP 2016009570**

(71) Applicant: **NHK Spring Co., Ltd.**
**Yokohama-shi, Kanagawa 236-0004 (JP)**

(72) Inventor: **KURODA, Shigeru**
**Yokohama-shi**
**Kanagawa 236-0004 (JP)**

(74) Representative: **Dehns**
**St. Brides House**
**10 Salisbury Square**
**London EC4Y 8JD (GB)**

(54) **TORQUE TUNING METHOD AND BALL JOINT**

(57)    A torque tuning method includes a high-frequency induction heating apparatus (20) that generates a magnetic field from a coil (24) by passing an alternating current (i) to the coil (24), which is arranged so as to be separated from an outer housing (11). By passing the current (i) having a predetermined frequency from the high-frequency induction heating apparatus (20) to the coil (24), a ball portion (10b) is induction-heated by a magnetic field generated from the coil (24) through which the current (i) flows, and after the ball portion (10b) has reached a temperature at which a ball seat (12) can be deformed by induction heating, the current (i) is stopped and the ball portion (10b) is cooled.

FIG. 2

## Description

[Technical Field]

The present invention relates to a torque tuning method in a ball joint which plays a role of, for example, reducing an impact from a road surface to a vehicle, and relates to the ball joint. The torque tuning method is for adjusting a swing torque, a rotational torque and the like by adjusting a frictional force between a ball of a ball stud inserted into a housing through a ball seat and the ball seat.

[Background Art]

A suspension of the vehicle reduces the impact transmitted from the road surface to a vehicle body, and a stabilizer increases roll rigidity (rigidity against torsion) of the vehicle body. The suspension and the stabilizer are coupled to each other via a stabilizer link. The stabilizer link is configured to include ball joints at both ends of a rod-shaped support bar. In each ball joint, a spherical ball portion of the ball stud is rotatably housed in a cup-like housing via a resin ball seat.

The swing torque, the rotational torque, and an elastic lift amount change depending on the frictional force at the time of rotation of the ball portion. In the ball joint, the ball portion and the ball seat swings and slides due to a stroke of the suspension of the vehicle, and characteristics at the time of swinging and sliding are respectively defined as the swing torque and the rotational torque. When the frictional force at the time of rotation of the ball portion increases and the swing torque and the rotational torque increase, the ride comfort deteriorates.

The above-mentioned elastic lift amount is a movement amount of the ball portion with respect to the ball seat. When the frictional force decreases, the elastic lift amount increases and the ball portion moves largely in the housing via the ball seat. Thus, the ball joint becomes loose and generates an abnormal noise during running of the vehicle. That is, when the frictional force decreases, there is a reciprocal relationship such that the swing torque and the rotational torque decrease but the elastic lift amount increases.

Therefore, for example, by adjusting a tightening margin between the ball seat and the housing, the swing torque and the rotational torque are reduced to improve the ride comfort of the vehicle, and the elastic lift amount is reduced not to make the ball joint loose. As the prior art of this kind, there is a stabilizer link described in Patent Document 1.

In the ball joint of the stabilizer link described in Patent Document 1, after the ball portion of the ball stud is inserted into the ball seat, the ball portion is fitted into the housing together with the ball seat. During fabrication of this configuration, a subassembly including the stud ball and the ball seat is inserted as a core into a mold to form a cavity, and insert molding is performed to inject resin into the cavity. At this time, by setting a clearance between the ball portion and the ball seat to a predetermined value and performing the insert molding by appropriately controlling an injection condition of the resin, the tightening margin of the ball seat is set to an optimum value after the injection molding. By this setting, the swing torque, the rotational torque, and the elastic lift amount are appropriately adjusted.

[Citation List]

[Patent Literature]

Patent Document 1: Japanese Patent Application Publication No. 2011-247338

[Summary of Invention]

[Technical Problem]

However, in Patent Document 1, when an accuracy of the clearance between the ball portion and the ball seat is low, it is not possible to set the tightening margin of the ball seat to the optimum value, and thus there is a problem that the swing torque, the rotational torque, and the elastic lift amount cannot be appropriately adjusted.

The present invention has been made in view of the above circumstances, and objects of the present invention are to provide a torque tuning method capable of appropriately adjusting a frictional force between a ball portion and a ball seat in a structure in which the ball portion of a ball stud covered with the ball seat is included in a resin housing, and to provide a ball joint.

[Solution to Problem]

In order to solve the above problems, a torque tuning method of the present invention is a method for a ball joint including: a ball stud formed by integrally joining a metal spherical portion to another end portion of a stud portion having one end portion connected to a structure body; a resin housing supporting the spherical portion of the ball stud swingably and rotatably, and having a space where one side is open; and a resin support member interposed between the housing and the spherical portion, in which the spherical portion covered by the support member is included in the housing, the torque tuning method adjusting a frictional force between the spherical portion and the support member, wherein the spherical portion is induction-heated so that the support member is at a deformable temperature.

A ball joint of the present invention includes: a ball stud formed by integrally joining a metal spherical portion to another end portion of a stud portion having one end portion connected to a structure body; a resin housing supporting the spherical portion of the ball stud swingably and rotatably, and having a space where one side is open; and a resin support member interposed between the housing and the spherical portion, in which the spherical portion covered by the support member is included in the housing, wherein a tightening margin between the support member and the spherical portion is largest at a diameter portion of the spherical portion perpendicular to an axial direction of the ball stud at a center of the spherical portion, and is smaller as it goes away in the axial direction from the diameter portion.

[Advantageous Effects of Invention]

According to the present invention, in a configuration in which the ball portion of the ball stud covered with a ball seat is included in the resin housing, it is possible to provide a torque tuning method capable of appropriately adjusting the frictional force between the ball portion and the ball seat, and to provide a ball joint.

[Brief Description of Drawings]

FIG. 1 is a vertical cross-sectional view of a ball joint of a stabilizer link according to an embodiment of the present invention;
FIG. 2 is a diagram showing a configuration of a high-frequency induction heating apparatus for performing torque tuning by high-frequency induction heating, and a ball joint;
FIG. 3 is a plan view of the ball joint and a coil shown in FIG. 2;
FIG. 4 is a diagram showing a relationship between a diameter of an object to be heated and a density distribution (an eddy current density distribution) of an eddy current causing induction heating in the object to be heated;
FIG. 5 is a diagram showing a configuration of the high-frequency induction heating apparatus for performing torque tuning by high-frequency induction heating, and the ball joint of Another Example 1;
FIG. 6 is a plan view of the ball joint and two coils shown in FIG. 5;
FIG. 7 is a diagram showing a configuration in which the coil for high-frequency induction heating is disposed around the outer housing of Another Example 2;
FIG. 8A shows a configuration of a coil which is applied as the coil shown in FIG. 7, and is a configuration diagram of the coil formed by winding of a conductive wire in a rectangular planar shape;
FIG. 8B shows a configuration of a coil which is applied as the coil shown in FIG. 7, and is a configuration diagram of the coil formed by meandering of a conductive wire in a rectangular planar shape;
FIG. 9 is a diagram showing a configuration of a heater heating apparatus for performing torque tuning by heater heating, and the ball joint;
FIG. 10 is a partial cross-sectional appearance view showing a state in which a ball stud is rotated at a high speed; and
FIG. 11 is a partial cross-sectional appearance view showing a state in which the ball stud is swinging.

[Description of Embodiments]

Hereinafter, an embodiment of the present invention will be described with reference to the drawings.

<Embodiment>

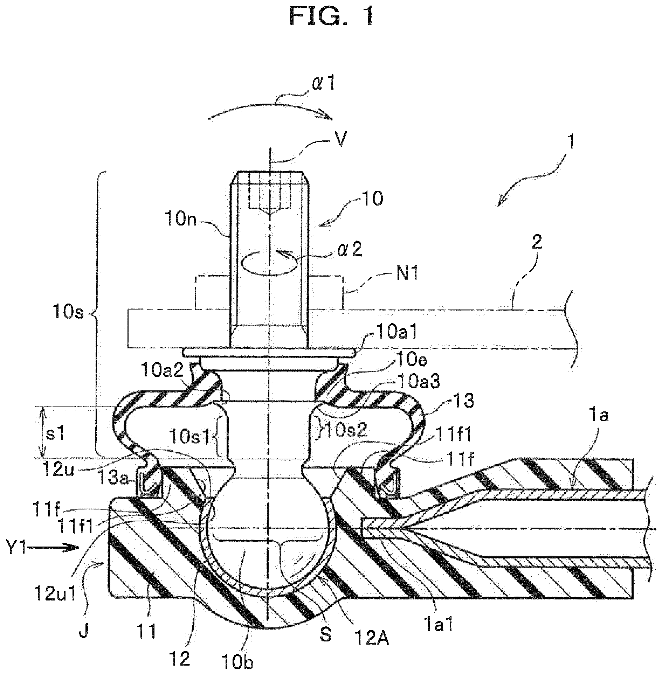

FIG. 1 is a vertical cross-sectional view of a ball joint of a stabilizer link according to an embodiment of the present invention. In a ball joint J shown in FIG. 1, a resin ball seat 12 is insert molded so as to cover a ball portion 10b at one end portion of a ball stud 10, and further, the metal ball portion 10b covered with the ball seat 12 and a tip end portion 1a1 of a support bar 1a for connecting the ball joint are insert molded so as to be integrally coupled to each other by a resin housing 11.

In a connection structure in which there is no gap between the ball portion 10b and the ball seat 12 and between the ball seat 12 and an outer housing 11, a low torque stabilizer link capable of setting a swing torque, a rotational torque (value), and an elastic lift amount in an appropriate range is realized by adjusting a frictional force between the ball portion 10b and the ball seat 12 by torque tuning described below.

Here, a suspension of a vehicle reduces an impact transmitted from a road surface to a vehicle body, a stabilizer increases roll rigidity of the vehicle body, and the suspension and the stabilizer are connected via a stabilizer link 1. The stabilizer link 1 is configured to include the above-described ball joint J at both ends of a rod-shaped support bar.

One end of the suspension indicated by reference numeral 2 or one end of the stabilizer is inserted into a stud portion 10s of the ball joint J up to a position of a flange portion 10a1 through a through-hole and is fastened and fixed by a nut N1. Note that a suspension 2 or a stabilizer 2 constitutes a structure body described in claims.

The ball stud 10 has a structure in which the spherical ball portion 10b is integrally connected to one end of the rod-shaped stud portion 10s. A male screw 10n is threaded in the stud portion 10s, and the flange portion 10a1 and a small flange portion 10a2, which extend circumferentially, are formed apart from each other on a tip end side (the ball portion 10b side) of the male screw 10n. A dust cover 13 is disposed between an upper end portion of the outer housing 11 and the flange portion 10a1.

In the ball joint J, the ball portion 10b at one end portion of the ball stud 10 is covered with the ball seat 12, and the covered ball portion 10b and the metallic support bar 1a are integrally included and fixed in the resin outer housing 11. For example, a steel pipe is used as a metal material of the support bar 1a, and the tip end portion 1a1 is pressed in a direction in which the ball stud 10 extends, and is deformed into a flat plate shape. Note that the support bar 1a may be made of resin or other materials besides metal. Further, when the support bar 1a is made of resin, it may be integrated with the outer housing 11 described below.

A columnar straight portion 10s1 is formed on a lower side (the ball portion 10b side) of the small flange portion 10a2 formed in a circular shape of the stud portion 10s. Or, a columnar straight portion 10s2 having a length not less than a predetermined length (for example, 1 mm) may be formed below an R portion 10a3 below the small flange portion 10a2, and a tapered shape (conical shape), which is thinner as approaching the ball portion 10b, may be formed from a lower portion of the straight portion 10s2 to a position close to the ball portion 10b.

As the outer housing 11, PA66-GF30 (a material in which glass fiber of 30% by weight is contained in PA66) is used. Note that a material of the housing 11 may be any material as long as a strength requirement is satisfied. For example, engineering plastics such as PEEK (polyetheretherketone), PA66 (Polyamide 66), PPS (Poly Phenylene Sulfide Resin), POM (polyoxymethylene), super engineering plastics, FRP (Fiber Reinforced Plastics), GRP (glass reinforced plastic), CFRP (Carbon Fiber Reinforced Plastics), or the like are used.

In the outer housing 11, a convex flange 11f having a tapered (conical shape) portion 11f1 extending outward from an upper end 12u of the ball seat 12 is formed in an annular shape. A starting point of the tapered portion 11f1 is an outer corner 12u1 of the upper end 12u of the ball seat 12.

An inclination angle of the tapered portion 11f1 which is an inner peripheral surface of the convex flange 11f is designed to satisfy a swing angle of the ball stud 10 when the ball stud 10 swings (an arrow $\alpha$1). As described above, a buried portion of an iron link 13a of the dust cover 13 is press-fitted and fixed to an outer peripheral surface of the convex flange 11f.

The ball seat 12 is formed to have a spherical inner surface covering the spherical ball portion 10b of the ball stud 10. The POM is used as a material of the ball seat 12. Other materials besides the POM may be used as the material of the ball seat 12 as long as it is a thermoplastic resin and abrasion requirements and the like are satisfied. As described above, since the ball portion 10b of the ball stud 10 swings and slides on the inner surface of the ball seat 12, predetermined wear durability is required for the inner surface.

The engineering plastics such as PEEK (polyetheretherketone), PA66 (Polyamide 66), PA6 (Polyamide 6), PPS (Poly Phenylene Sulfide Resin), and the super engineering plastics are used as the ball seat 12. Since the ball seat 12 is formed by insert molding, a thermoplastic resin is preferably used.

Since a thickness of the outer housing 11 is significantly larger than that of the ball seat 12, shrinkage after molding is large. Therefore, after forming the outer housing 11, the ball portion 10b is tightened inwardly by both the outer housing 11 and the ball seat 12. Since the tightening increases the frictional force between the ball portion 10b and the ball seat 12 covered with the outer housing 11, it is necessary to adjust the swing torque, the rotational torque, and the elastic lift amount of the ball stud 10. In order to solve this problem, the torque tuning described below is performed.

<Torque tuning method>

The torque tuning is a step of appropriately adjusting the swing torque, the rotational torque, and the elastic lift amount of the ball stud 10 by adjusting the frictional force between the ball portion 10b and the ball seat 12. A torque tuning method performed by induction heating the ball portion 10b in order to perform the torque tuning will be described. Note that the swing torque and the rotational torque are abbreviated as each torque, and the elastic lift amount is abbreviated as the lift amount.

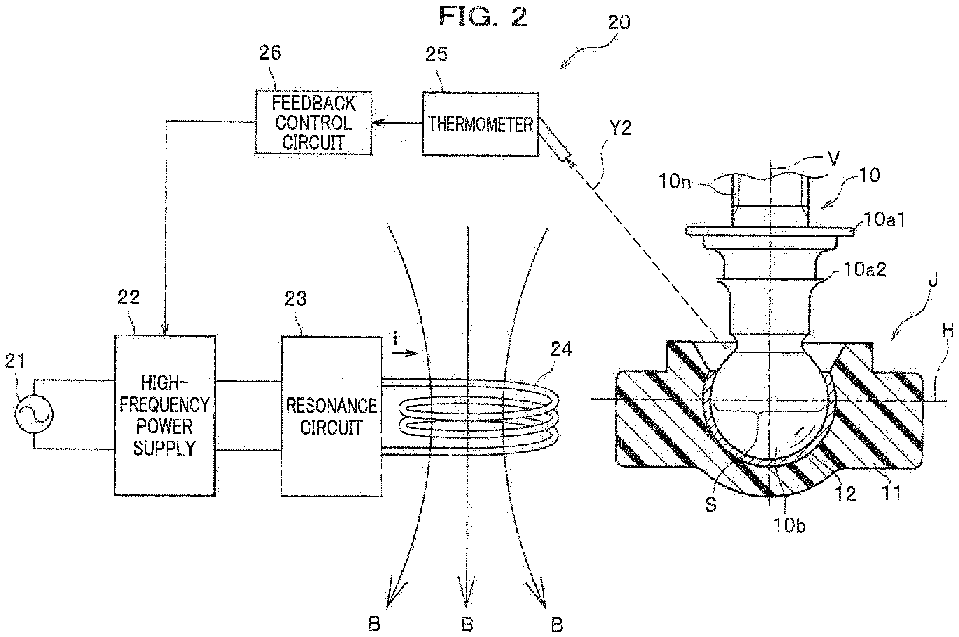

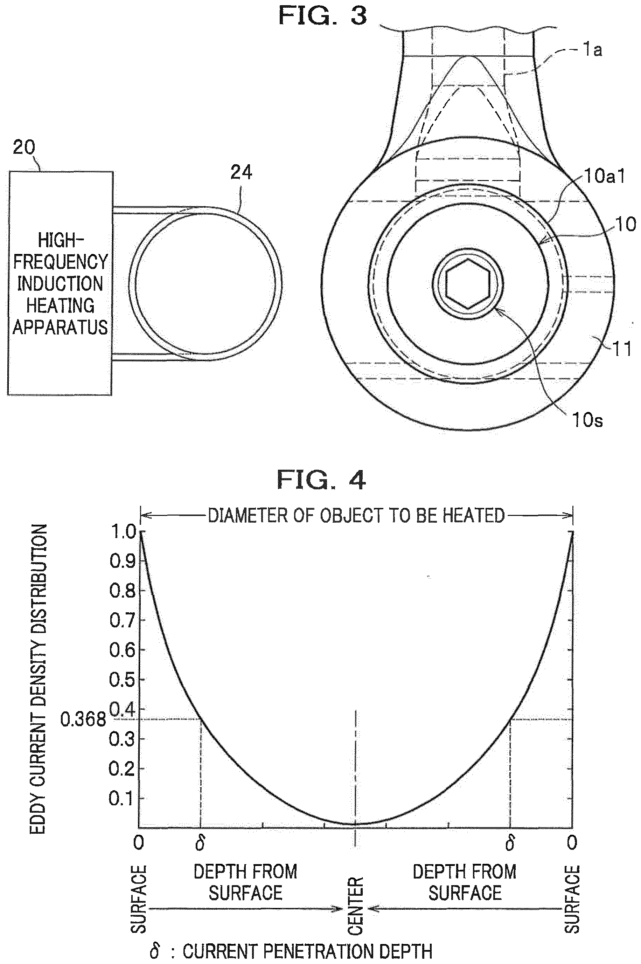

FIG. 2 is a diagram showing a configuration of a high-frequency induction heating apparatus for performing the torque tuning by high-frequency induction heating, and the ball joint. However, the ball joint J shown in FIG. 2 is a partial cross-sectional view when the ball joint J shown in FIG. 1 is viewed from an arrow Y1 direction. FIG. 3 is a plan view of the ball joint J and a coil 24 shown in FIG. 2.

A high-frequency induction heating apparatus 20 shown in FIG. 2 induction-heats the metal ball portion 10b by applying a high-frequency current to the coil 24, and is configured to include a high-frequency power supply 22 to which an AC power supply 21 such as a commercial power supply is connected, a resonance circuit 23, the coil 24, a thermometer 25, and a feedback control circuit 26. Incidentally, the ball portion 10b is formed of a metallic material such as stainless steel, steel or the like capable of induction heating. In the present embodiment, it is assumed that the ball portion 10b is made of steel.

The coil 24 is disposed in the vicinity of a side surface of the ball joint J so as not to contact the ball joint J and the support bar 1a. In this example, the coil 24 is disposed vertically across an extension of a horizontal line H passing in a horizontal direction at a center of the ball portion 10b in a state shown in FIG. 2. The coil 24 is cooled by a cooling water circulation unit (not shown) in order to prevent damage due to heat. Note that an axis V passing the center of the ball portion 10b perpendicularly to the horizontal line H is an axial center of the ball stud 10. A diameter of the ball portion 10b on the horizontal line H is also referred to as an equator S.

The high-frequency power supply 22 converts a current of a predetermined frequency such as a commercial frequency supplied from the AC power supply 21 to a current of a desired frequency, and supplies it to the coil 24 as an alternating current i such as a high-frequency current through the resonance circuit 23.

The resonance circuit 23 is an LC parallel resonance circuit or the like including a capacitor C (not shown) which is a component of the circuit 23 and a coil L (the coil 24). As well known, the resonance circuit 23 stores energy (electric power) in the capacitor C while exchanging electric energy and magnetic energy at a resonance frequency, thereby applying a high-frequency current i to the coil 24. A strong magnetic field B is generated from the coil 24 by this current i, and an eddy current is induced in the metal ball portion 10b, so that the ball portion 10b is induction-heated.

That is, the high-frequency power supply 22 converts the current from the AC power supply 21 through the resonance circuit 23 into a high-frequency current i having a frequency (for example, several KHz or higher) much higher than a frequency of the current from the AC power supply 21, and supplies it to the coil 24, so that the strong magnetic field B is generated from the coil 24. That is, a high density eddy current is induced in the metallic ball portion 10b apart from the coil 24 by the magnetic field B, so that the ball portion 10b is directly heated by the eddy current. In other words, heating with a high response is realized by induction heating the ball portion 10b. By this induction heating, the ball portion 10b is heated to a temperature (sheet deformable temperature: for example, 150°C) which is lower than a melting point of a resin of the ball sheet 12 and capable of deforming the ball seat 12.

Generally, as shown in FIG. 4, the eddy current (eddy current density distribution) causing the induction heating is stronger as it is closer to the surface "0" of an object to be heated (the ball portion 10b), and is exponentially weaker as it goes to an inner center portion. A depth to a point where the eddy current is reduced to 0.368 times a strength "1" of the eddy current on the surface is called a current penetration depth $\delta$ and is expressed by the following equation (1).

$$\delta = 5.03 \sqrt{(\rho/\mu f)} \ [\text{cm}] \qquad \text{--- (1)}$$

where $\rho$ is resistivity of the object to be heated ($\mu\Omega\cdot$cm), $\mu$ is relative permeability of the object to be heated ($\mu > 1$ for a magnetic material, and $\mu = 1$ for a non-magnetic material), and f is frequency [Hz].

From the above equation (1), when induction heating the object to be heated (ball portion 10b) ($\rho/\mu$ = constant), the current penetration depth $\delta$ is smaller as the frequency f of the current increases, so that a heat generating portion of the object to be heated is concentrated near the surface. Conversely, as the frequency f is lower, the current penetration depth $\delta$ is larger, so that the heat generating portion of the object to be heated moves toward the center. In this case, a substantially constant exothermic temperature (heating temperature) ranges from the heat generating portion of the center to the surface.

Returning to FIG. 2, the thermometer 25 measures a temperature of the ball portion 10b, and for example, a radiation thermometer is used. The thermometer 25 measures an intensity of an infrared ray indicated by the arrow Y2 radiated from the ball portion 10b and measures the temperature of the ball portion 10b.

The feedback control circuit 26 controls an amount of current in the high-frequency power supply 22 and power on and off so that the temperature measured by the thermometer 25 is constant at a predetermined temperature. By this control, the temperature of the ball portion 10b is maintained at the sheet deformable temperature.

When the ball portion 10b is induction-heated to the sheet deformable temperature, the ball portion 10b thermally expands and the diameter (ball diameter) of the ball portion 10b expands, and in accordance with this expansion, the ball seat 12 is also deformed so that its inner spherical surface expands. Thereafter, when the ball portion 10b is cooled by stopping the induction heating, the ball diameter contracts to return to an original size before heating, however, expansion deformation of the inner spherical surface of the ball seat 12 remains as thermal deformation. Therefore, a slight gap is formed between the ball seat 12 and the ball portion 10b, and the frictional force therebetween is reduced by the gap, so that the each torque and the lift amount of the ball stud 10 can be adjusted.

Specifically, for example, when the material of the ball seat 12 is POM, since the melting point of POM is about 160°C, the steel ball portion 10b is heated to about 140°C to 150°C. Although a thermal expansion coefficient of the steel ball portion 10b is very small, the ball diameter is slightly enlarged by heating at 140°C to 150°C. The ball seat 12 made of POM is softened and deformed by heat of about 140°C to 150°C, and maintains its deformation when it is cooled after the deformation.

That is, the temperature by the induction heating of the ball portion 10b is set in advance as follows according to the materials of both the ball portion 10b and the ball seat 12. That is, as described above, an induction heating temperature for the ball portion 10b is set so that the frictional force between the ball portion 10b and the ball seat 12 is the frictional force making the each torque and the lift amount of the ball stud 10 appropriate values by cooling after the induction heating of the ball portion 10b.

Since the coil 24 is disposed at a position closest to the equator S of the ball part 10b, the induction heating temperature is the highest in the vicinity of the equator S of the ball part 10b, and the temperature is lowered from the high temperature as it goes away from the equator S. In accordance with such a temperature distribution, thermal expansion of the ball portion 10b is largest in the vicinity of the equator S and is smaller as it goes away from the equator S, and the inner spherical surface of the ball seat 12 also expands and deforms in accordance with the thermal expansion.

Therefore, a dimensional difference between the inner spherical surface of the ball sheet 12 deformed after cooling the ball portion 10b and an outer spherical surface of the ball portion 10b returned to the original size before the induction heating is the largest in the vicinity of the equator S, and is smaller as it goes away from the equator S. Therefore, the ball portion 10b is looser as it approaches the equator S and is more tightly fastened as it approaches a boundary with the stud portion 10s, so that the frictional force is the smallest at a position of the equator S and is larger as it goes away from the equator S. Due to this frictional force distribution, the each torque and the lift amount can be made appropriate when the ball stud 10 swings and rotates. In addition, it is possible to make it difficult for the ball portion 10b to come off from the outer housing 11.

Sizes of an outer diameter of the equator S of the ball portion 10b and the outer diameter at a position away from the equator S of the ball portion 10b, and sizes of the diameter of the inner spherical surface of the ball seat 12 at a position facing the equator S and the diameter of the inner spherical surface of the ball seat 12 at a position away from the position facing the equator S can be respectively measured with a three-dimensional measuring device, a measuring device using laser light, or the like. This measurement result is fed back to the torque tuning, so that the each torque and the lift amount suitable for the specifications can be obtained.

In order to adjust the above-described frictional force, there are various methods such as changing, for example, the frequency f of the current i (FIG. 2) flowing through the coil 24, an induction heating time, or the facing area of the coil 24 to the ball portion 10b.

For example, as described above (see FIG. 4), when the frequency f of the current i is high, the ball portion 10b is heated from the side close to the surface thereof, and when the frequency f is low, the ball portion 10b is heated from the side close to the center thereof. Therefore, when the frequency f is lowered, since it is heated from the side close to the center of the ball portion 10b, it takes longer time than when the frequency f is high in order to set the surface temperature of the ball portion 10b to the sheet deformable temperature. However, when the frequency f is low, since it is heated from the inner side, an amount of the thermal expansion is increased even when it takes time, so that an amount of the deformation of the ball seat 12 is increased. When the ball portion 10b is cooled in this state, since the deformation of the inner spherical surface of the ball seat 12 is increased and maintained, the gap between the ball seat 12 and the ball portion 10b is large, an overlapping degree therebetween is reduced, and the frictional force therebetween is reduced. In this case, the each torque is adjusted to be smaller and the lift amount is adjusted to be larger.

On the other hand, when the frequency f of the current i is raised, and the surface temperature of the ball portion 10b is set to the sheet deformable temperature in a short time, and then the induction heating is stopped in a short time, that is, when the induction heating time is short, the amount of thermal expansion of the ball portion 10b is reduced, and accordingly the amount of deformation of the ball seat 12 is also reduced. In this case, when the ball portion 10b is cooled, since the deformation of the inner spherical surface of the ball seat 12 is reduced and maintained, the gap between the ball portion 10b and the ball seat 12 is reduced, the overlapping degree therebetween is increased, and the frictional force therebetween is increased more than that when the frictional force is reduced as described above. For example, the frictional force is slightly lower than that before the induction heating. In this case, the each torque is adjusted to be larger, and the lift amount is adjusted to be smaller.

When it is heated for a long time while the frequency f of the current i is high and the surface temperature of the ball portion 10b is controlled to be constant at the sheet deformable temperature, that is, when the induction heating time is long, the ball portion 10b is heated from the surface to the central portion thereof and the amount of thermal expansion is increased. Accordingly, the amount of deformation of the ball seat 12 is also increased. In this case, as described above, the gap between the ball seat 12 and the ball portion 10b is increased and the frictional force is reduced.

Next, as the facing area of the coil 24 to the ball portion 10b is increased, an induction heating area of the ball portion 10b is increased and an heating amount of the entire outer spherical surface is increased, so that the ball portion 10b is induction-heated in a shorter time. As described above, by stopping the induction heating in a short time or a long time, the amount of deformation of the ball seat 12 is reduced or increased, so that the frictional force between the ball seat 12 and the ball portion 10b can be reduced to an arbitrary amount.

<Effects of torque tuning method>

Effects of the torque tuning method according to the present embodiment described above will be described.

In a first method, the ball portion 10b is induction-heated by the high-frequency induction heating apparatus 20 so that the ball sheet 12 is at a deformable temperature.

According to this method, when the metal ball portion 10b is induction-heated to the temperature at which the resin ball seat 12 can be deformed at a temperature below the melting point of the ball seat 12, the ball portion 10b expands due to the thermal expansion, so that the inner spherical surface of the resin ball seat 12 is also expanded and deformed. Thereafter, when the ball portion 10b is cooled by stopping the induction heating, the ball portion 10b contracts and returns to the original size before heating, however, the expansion deformation of the inner spherical surface of the ball seat 12 is maintained as the deformation. Therefore, the slight gap is formed between the ball seat 12 and the ball portion 10b, and the frictional force therebetween is reduced by the gap. It is possible to appropriately adjust the frictional force therebetween by adjusting the degree of reduction of the frictional force by the induction heating temperature or the induction heating time. Thus, it is possible to appropriately adjust the swing torque, the rotational torque, and the elastic lift amount when the ball stud 10 mounted on the vehicle or the like swings or rotates.

In a second method, the coil 24 for the induction heating is disposed apart from a surface position of the outer housing 11 in a direction of the diameter (equator S) of the ball portion 10b perpendicular to an axial direction of the stud portion 10s at the center of the ball portion 10b.

According to this method, since the coil 24 is disposed apart from the surface position of the outer housing 11 in the direction of the equator S of the ball portion 10b perpendicular to the axial direction of the stud portion 10s, the temperature is the highest in the vicinity of the equator S of the ball part 10b by the induction heating, and the temperature is lowered from the high temperature as it goes away from the equator S. In accordance with such a temperature distribution, the thermal expansion of the ball portion 10b is largest in the vicinity of the equator S and is smaller as it goes away from the equator S, and the inner spherical surface of the ball seat 12 also expands and deforms in accordance with the thermal expansion.

Therefore, the dimensional difference between the ball sheet 12 deformed after cooling the ball portion 10b and the ball portion 10b returned to the original size before the induction heating is the largest in the vicinity of the equator S, and is smaller as it goes away from the equator S. Therefore, the ball portion 10b is more loosely fastened as it approaches the equator S and is more tightly fastened as it approaches the boundary with the stud portion 10s, so that the frictional force is the smallest at the position of the equator S and is larger as it goes away from the equator S. Due to this frictional force distribution, the each torque and the lift amount of the ball stud 10 can be made appropriate. In addition, it is possible to make it difficult for the ball portion 10b to come off from the outer housing 11.

In a third method, the frequency of the current i flowing through the coil 24 is variably set, a time for the current i flowing is shorter as the set frequency is higher than a predetermined frequency, and the time for the current i flowing is longer as the set frequency is lower than the predetermined frequency.

According to this method, when the frequency of the current i is high, it is heated from the side close to the surface of the ball part 10b, and when the frequency is low, it is heated from the side close to the center of the ball part 10b. Therefore, it takes more time to heat the surface temperature of the ball portion 10b to the deformable temperature of the ball seat 12 as the frequency is lower. Conversely, it takes less time to be heated to the deformable temperature as the frequency is higher.

From this fact, although it takes more time as the frequency is lower, the ball portion 10b is heated from the inner side, and thus the amount of thermal expansion increases, so that the amount of deformation of the ball seat 12 also increases. Therefore, the deformation of the inner spherical surface of the ball seat 12 increases after cooling the ball portion 10b, so that the gap between the ball seat 12 and the ball portion 10b increases, and the frictional force is reduced. In this case, the each torque is adjusted to be lower, and the lift amount is adjusted to be higher. Conversely, although it takes less time as the frequency is higher, the ball portion 10b is heated from the surface side, and thus the amount of thermal expansion is reduced, so that the amount of deformation of the ball seat 12 is also reduced. Therefore, the deformation of the inner spherical surface of the ball seat 12 is reduced after cooling the ball portion 10b, so that the gap between the ball seat 12 and the ball portion 10b is reduced, and the frictional force increases. In this case, the each torque is adjusted to be higher, and the lift amount is adjusted to be lower. In this manner, by variably setting the frequency of the current and varying the time for the set current flowing, it is possible to arbitrarily adjust the frictional force.

<Another Example 1 of high-frequency induction heating>

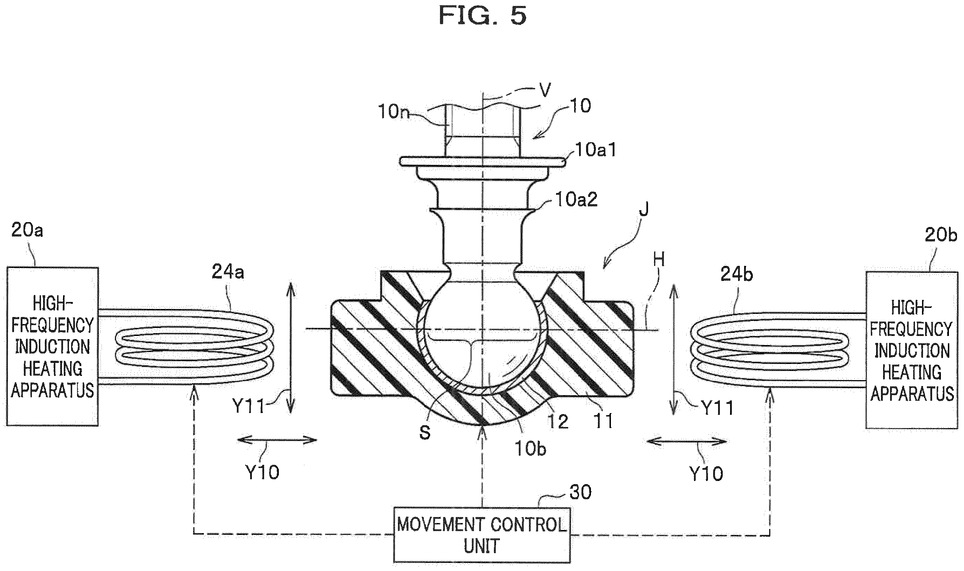

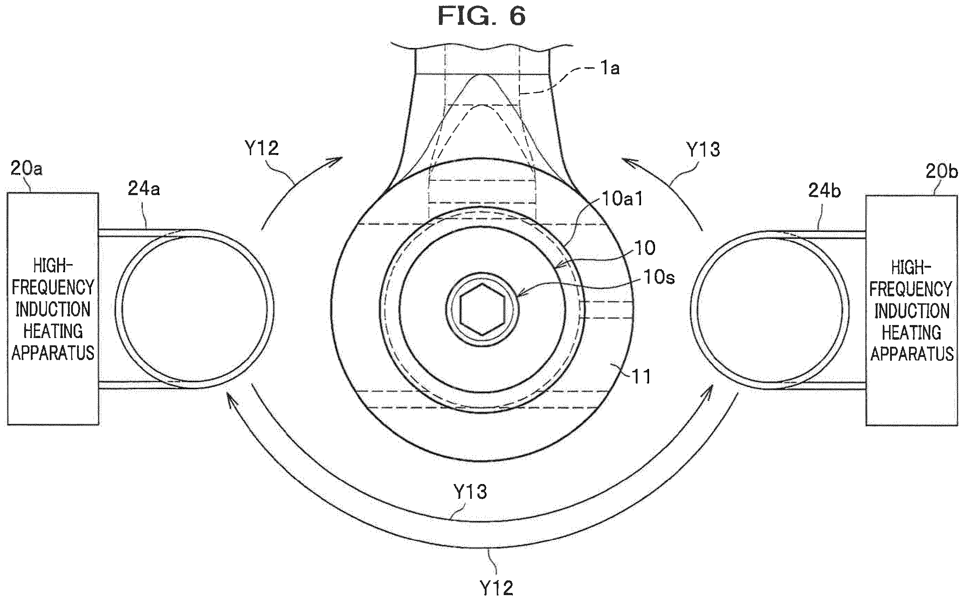

FIG. 5 is a diagram showing a configuration of the high-frequency induction heating apparatus for performing the torque tuning by high-frequency induction heating, and the ball joint of Another Example 1. FIG. 6 is a plan view of the ball joint and two coils shown in FIG. 5. In the configuration shown in FIGS. 5 and 6, the same two coils 24a and 24b are arranged on opposite sides of the ball joint J so as to face each other. The coils 24a and 24b are arranged vertically across the extension of the horizontal line H. The coils 24a and 24b are respectively connected to resonance circuits 23 (FIG. 2) of high-frequency induction heating apparatuses 20a and 20b as shown in FIG. 2. However, the two coils 24a and 24b may be connected to the resonance circuit 23 of one high-frequency induction heating apparatus 20.

When the two coils 24 a and 24 b are arranged on both sides of the ball joint J in this way, an induction heating amount of the ball portion 10b can be larger than when one coil 24 is used. Therefore, the ball portion 10b can be more quickly heated and thermally expanded by induction heating, so that the ball seat 12 can be more quickly enlarged and deformed.

As shown in FIG. 5, the two coils 24a, 24b may be moved and set to a position close to or away from the outer housing 11 as indicated by bidirectional arrows Y10 in the horizontal direction by a movement control unit 30 using an actuator. In this case, as described above, since the distance between the coil 24 and the ball portion 10b changes, the amount of thermal expansion of the ball portion 10b and the amount of deformation of the ball seat 12 can be arbitrarily varied so that a desired frictional force between the ball portion 10b and the ball seat 12 can be obtained. This movement setting can also be applied to the configuration shown in

FIG. 2.

When the distance between the coil 24 and the ball portion 10b is narrowed by the movement control unit 30, since a magnetic flux in the magnetic field B generated from the coil 24 is more strongly applied to the ball portion 10b, the eddy current induced in the ball portion 10b is increased, and the ball portion 10b is induction-heated in a shorter time. When the induction heating is stopped in a short time, the amount of thermal expansion of the ball portion 10b is small, so that the amount of deformation of the ball seat 12 is also reduced. In this case, as described above, the gap between the ball portion 10b and the ball seat 12 is reduced and the frictional force is slightly lower than that before the induction heating. Conversely, when the induction heating is stopped in a long time, the amount of thermal expansion of the ball portion 10b increases and the amount of deformation of the ball seat 12 also increases, so that the gap therebetween increases and the frictional force is reduced.

Further, as shown in FIG. 5, the two coils 24a, 24b may be moved upward or downward with respect to the outer housing 11 as indicated by bidirectional arrows Y11 in the vertical direction by the movement control unit 30. In this case, since a position of the induction heating area of the ball portion 10b can be changed, a deformed state of the ball seat 12 can be changed, and it is possible to appropriately adjust the each torque and the lift amount which vary depending on various vehicles or the like by changing the frictional force distribution with the ball portion 10b. Further, the outer housing 11 may be moved upward and downward with respect to the coils 24a and 24b by the movement control unit 30. A relative movement between the outer housing 11 and the coils 24a, 24b in this case can also be applied to the configuration shown in FIG. 2.

Further, the coils 24a, 24b may be vertically moved with respect to the outer housing 11 during induction heating of the ball portion 10b by the movement control unit 30. In this case, since the induction heating area of the entire ball portion 10b can be increased, the induction heating time can be short.

Further, as shown in FIG. 6, the coils 24a and 24b may be induction-heated while being rotated and moved in a clockwise direction (arrow Y12) or counterclockwise direction (arrow Y13) in a horizontal state around the outer housing 11 by the movement control unit 30 so as not to hit the support bar 1a. In this case, it is possible to perform the induction heating of the ball portion 10b to the sheet deformable temperature in a shorter time. Further, the outer housing 11 may be rotated about the axis and inverted so as not to hit the support bar 1a. The relative movement between the outer housing 11 and the coils 24a, 24b in this case can also be applied to the configuration shown in FIG. 2.

<Another Example 2 of high frequency induction heating>

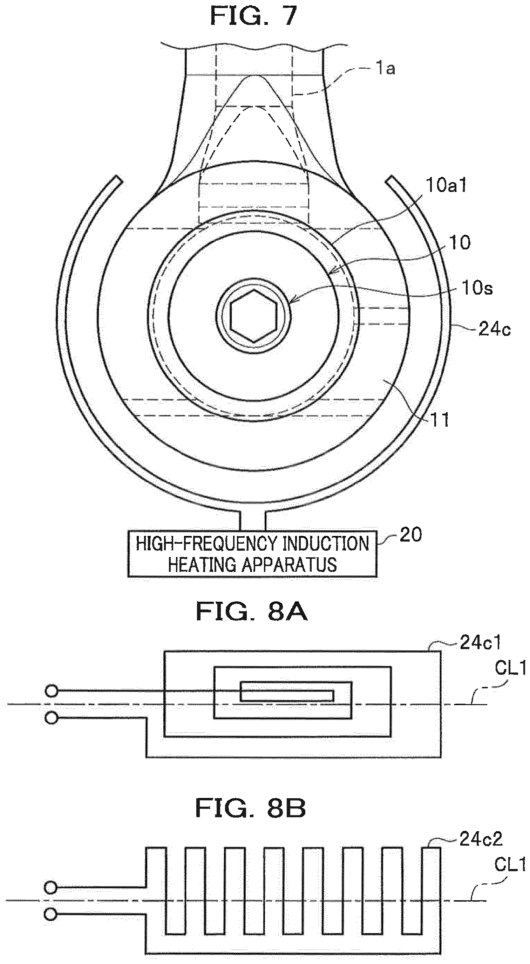

FIG. 7 is a diagram showing a configuration in which a coil 24c for high-frequency induction heating is disposed around the outer housing 11 of Another Example 2. The coil 24c shown in FIG. 7 is a coil 24c1 shown in FIG. 8A or a coil 24c2 shown in FIG. 8B. The coil 24c1 is formed by winding a conductive wire covered with an insulator in a rectangular planar shape. The coil 24c2 is formed by meandering of the conductive wire covered with the insulator in a rectangular planar shape. It should be noted that a one-dot chain line CL1 is a longitudinal center line of the coil 24c1 or the coil 24c2 in the rectangular shape.

As shown in FIG. 7, the coil 24 c is disposed to surround the outer periphery of the outer housing 11 except for the support bar 1a in a separated state. Further, the coil 24c is disposed such that the center line CL1 (FIGS. 8A and 8B) substantially coincides with a horizontal concentric circle at the center of the ball portion 10b. The coil 24c is connected to one high-frequency induction heating apparatus 20.

In this way, since the coil 24c is disposed to surround the outer periphery of the ball portion 10b except for the support bar 1a, it is possible to reach the sheet deformable temperature in a short time by induction heating of the ball portion 10b. Therefore, the ball portion 10b can be heated more quickly by the induction heating and thermally expanded, so that the ball seat 12 can be enlarged and deformed more quickly.

<Another Example 1 of torque tuning method>

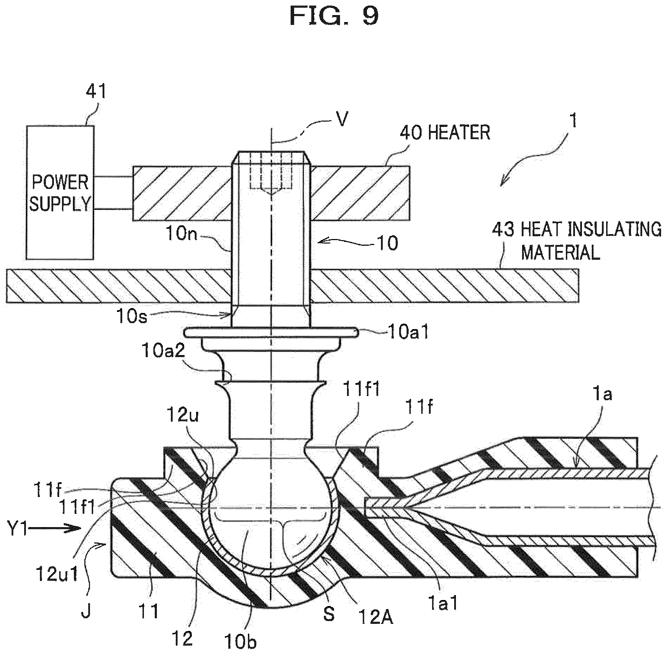

In the torque tuning method described above, the ball portion 10b is heated by the induction heating, but a method for heating the ball portion 10b other than the induction heating will be described with reference to FIG. 9. As shown in FIG. 9, a heater 40 connected to an AC (or a DC) power supply 41 and a heat insulating material 43 are assembled to the stud portion 10s of the ball stud 10 to heat the ball portion 10b.

The heater 40 is annular and an opening at a center thereof is fitted with the stud portion 10s, and heater wires at both ends thereof are connected to the power supply 41. The heat insulating material 43 is formed by molding glass wool or the like for heat insulation into a plate shape or the like, and a through-hole to be fitted with the stud portion 10s is formed in a center thereof. When the heat insulating material 43 and the heater 40 are assembled to the stud portion 10s and the ball portion 10b is heated, as shown in FIG. 9, the dust cover 13 is not attached.

First, after the heat insulating material 43 is assembled to the stud portion 10s, the heater 40 is separated from the heat insulating material 43 by a predetermined distance upward and assembled to the stud portion 10s. Next, the power supply 41 is turned on and the heater 40 heats the stud portion 10s. As described above, when the material of the ball seat 12 is POM, since the melting point of POM is about 160°C, the heating temperature is a temperature to heat the steel ball portion 10b to about 140°C to 150°C. The stud portion 10s is heated from a contact portion of the heater 40, and this heat is transferred to the ball portion 10b on the lower side by thermal conduction. At this time, since the heat insulating material 43 is disposed on the lower side of the heater 40, the heat radiated from the heater 40 to a space is blocked by the heat insulating material 43. Therefore, the heat transmitted through the space is not transferred to the lower housing 11.

When the heat conducted through the stud portion 10s is conducted to the ball portion 10b and the ball portion 10b is heated to 140°C to 150°C, the ball diameter slightly extends. At this time, the ball seat 12 made of POM is softened and deformed by heat of about 140°C to 150°C. After this deformation, when the heater 40 is turned off by shutting off the power supply 41, the stud portion 10s and the ball portion 10b are cooled after a predetermined time and the ball portion 10b returns to the size before heating, but the ball seat 12 maintains the above-described deformation. As a result, the gap between the ball seat 12 and the ball portion 10b increases, the overlapping degree therebetween is reduced, the frictional force therebetween is reduced, and it is possible to obtain the each torque and the lift amount suitable for the specifications.

A heating means for heating the stud portion 10s is not limited to the heater 40 to which the power source 41 is connected, and may be a heating means such as a heating device using a gas burner or oil. Further, unless the housing 11 is heated to such an extent that it deforms, the heat insulating material 43 is not necessary.

<Another Example 2 of torque tuning method>

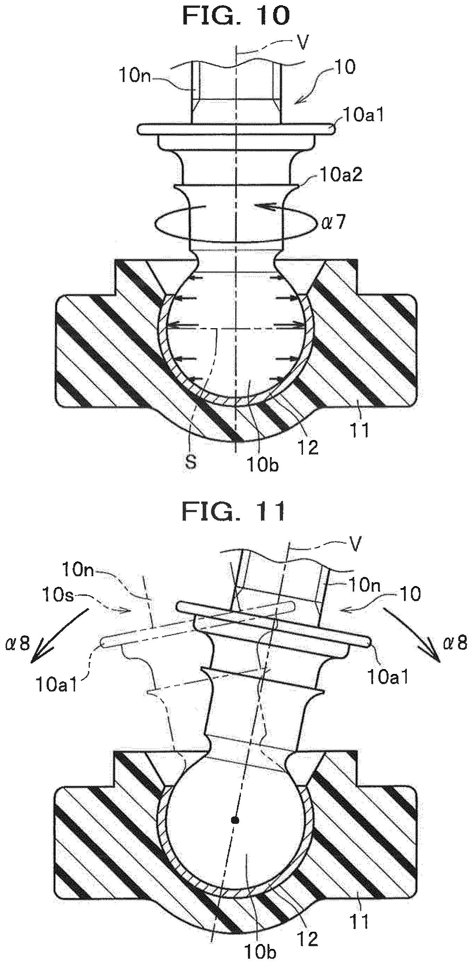

As in Another Example 1 of the above-described torque tuning method, in a state where the ball portion 10b is heated via the stud portion 10s, the ball stud 10 may be rotated at a high speed or may be rotated at a high speed and swung at the same time as described below. FIG. 10 is a partial cross-sectional appearance view showing a state in which the ball stud is rotated at a high speed. FIG. 11 is a partial cross-sectional appearance view showing a state in which the ball stud is swinging.

First, as described above, after the ball portion 10b is heated via the stud portion 10s, the ball portion 10b is rotated at a high speed around the axis V of the ball stud 10 in a direction indicated by an arrow α7 in FIG. 10, so that the inner spherical surface of the ball seat 12 wears by the outer spherical surface of the ball portion 10b. By this wear, the frictional force between the ball portion 10b and the ball seat 12 is reduced. By this reduction of the frictional force, the each torque and the lift amount of the ball stud 10 can be appropriately adjusted.

More specifically, a circumferential speed of the ball portion 10b is fast near the equator S, and the circumferential speed is slower as it goes away from the equator S. Therefore, an equatorial part including the equator S of the ball part 10b rotating at a high speed wears most, and the wear is smaller as it goes away from the equator S. Therefore, the frictional force therebetween is in accordance with distribution of the wear. That is, the frictional force of the equatorial part including the equator S of the ball part 10b is the smallest and is larger as it goes away from the equator S. In this manner, the frictional force is adjusted.

<Effects of Another Example 2 of torque tuning method>

Effects of Another Example 2 of such a torque tuning method will be described. According to the distribution of the frictional force described above, similarly to the above-described torque tuning by high-frequency induction heating, the dimensional difference between the inner spherical surface of the ball seat 12 and the outer spherical surface of the ball portion 10b is the largest in the vicinity of the equator S, and is smaller as it goes away from the equator S. Therefore, the ball portion 10b is more loosely fastened as it approaches the equator S and is more tightly fastened as it approaches the boundary with the stud portion 10s, so that the frictional force is the smallest at the position of the equator S and is larger as it goes away from the equator S. Therefore, it is possible to appropriately adjust the each torque and the lift amount when the ball stud 10 is swung and rotated. In addition, it is possible to make it difficult for the ball portion 10b to come off from the outer housing 11.

The size of the outer diameter of the ball portion 10b and the size of the inner diameter of the ball seat 12 after adjustment of the each torque and the lift amount can be respectively measured with the three-dimensional measuring device, the measuring device using laser light, or the like. This measurement result is fed back to the torque tuning in Another Example 2 described above, so that the each torque and the lift amount suitable for the specifications can be obtained.

In addition, when swinging as indicated by an arrow $\alpha 8$ in FIG. 11 is added to rotation of the ball stud 10 in the direction indicated by the arrow $\alpha 7$ in FIG. 10, an effect of the torque tuning can be further improved. It is preferable that the swinging indicated by the arrow $\alpha 8$ corresponds to actual swinging. By performing the swinging in this manner, the ball seat 12 can wear so as to provide a frictional force for reducing the actual swinging torque of the vehicle or the like.

<Characteristic structure of ball joint J>

When the torque tuning of the ball joint J is performed by the torque tuning method described above, the dimensional difference of the clearance formed between the ball seat 12 and the ball portion 10b is the largest at the diameter portion (equator S portion) of the ball portion 10b perpendicular to the axis of the ball stud 10 passing through the center of the ball portion 10b, and is smaller as it goes away from the diameter portion.

According to this structure, as described above, since the frictional force is the smallest at the position of the diameter portion of the ball portion 10b and is larger as it goes away from the diameter portion, the swinging torque and the rotational torque of the ball stud 10, and the elastic lift amount can be appropriately adjusted. Further, it is possible to make it difficult for the ball portion 10b to come off from the outer housing 11.

In addition, a specific configuration can be modified without departing from the spirits and scope of the present invention. The ball joint J in which the torque tuning according to the present invention is performed can be applied to a joint portion of a robot arm such as an industrial robot or a humanoid robot, and an apparatus such as a shovel car, a crane or the like in which an arm thereof rotates at a joint portion.

[Reference Signs List]

| | |
|---|---|
| 1: | stabilizer link |
| 1a: | support bar |
| 10: | ball stud |
| 10b: | ball portion (spherical portion) |
| 10s: | stud portion |
| 11: | outer housing (housing) |
| 12: | ball seat (support member) |
| 20, 20a, 20b: | high-frequency induction heating apparatus (induction heating apparatus) |
| 21: | AC power supply |
| 22: | high-frequency power supply |
| 23: | resonance circuit |
| 24, 24a, 24b, 24c, 24c1, 24c2: | coil |
| 25: | thermometer |
| 26: | feedback control circuit |
| 30: | movement control unit |
| i: | alternating current |
| B: | magnetic field |
| J: | ball joint |

**Claims**

1.  A torque tuning method for a ball joint comprising: a ball stud formed by integrally joining a metal spherical portion to another end portion of a stud portion having one end portion connected to a structure body; a resin housing supporting the spherical portion of the ball stud swingably and rotatably, and having a space where one side is open; and a resin support member interposed between the housing and the spherical portion, in which the spherical portion covered by the support member is included in the housing, the torque tuning method adjusting a frictional force between the spherical portion and the support member, wherein

    the spherical portion is induction-heated so that the support member is at a deformable temperature.

2.  The torque tuning method according to claim 1, wherein a coil for the induction heating is disposed apart from a surface position of the housing on an extension of a diameter of the spherical portion perpendicular to an axial direction of the stud portion at a center of the spherical portion.

3.  The torque tuning method according to claim 2, wherein a frequency of an alternating current flowing through the coil is variably set, a time for the alternating current flowing is shorter as the set frequency is higher than a predetermined frequency, and the time for the alternating current flowing is longer as the set frequency is lower than the predetermined frequency.

4.  The torque tuning method according to claim 2, wherein a plurality of coils are arranged independently and spaced from each other around the housing.

5.  The torque tuning method according to claim 2, wherein a distance between the coil and the spherical portion is changed by moving either one of the coil and the housing within a distance at which the spherical portion can be induction-heated.

6.  The torque tuning method according to claim 2, wherein the coil is disposed at an arbitrary opposed position between an upper and lower portions of the spherical portion in the axial direction of the stud portion.

7.  The torque tuning method according to claim 2, wherein the coil and the housing move up and down relative to each other during the induction heating of the spherical portion.

8.  The torque tuning method according to claim 2, wherein the housing and the coil are rotated relative to each other during the induction heating of the spherical portion.

9.  The torque tuning method according to claim 2, wherein the coil is formed in a rectangular shape by winding or meandering of a conductive wire, and the formed rectangular coil is disposed outside an outer peripheral surface of the housing.

10. A torque tuning method for a ball joint comprising: a ball stud formed by integrally joining a metal spherical portion to another end portion of a stud portion having one end portion connected to a structure body; a resin housing supporting the spherical portion of the ball stud swingably and rotatably, and having a space where one side is open; and a resin support member interposed between the housing and the spherical portion, in which the spherical portion covered by the support member is included in the housing, the torque tuning method adjusting a frictional force between the spherical portion and the support member, wherein

    the spherical portion is heated so that the support member is at a deformable temperature.

11. The torque tuning method according to claim 10, wherein the ball stud is rotated about an axial center of the ball stud at a high speed not lower than a predetermined speed so that an inner spherical surface covering the spherical portion of the support member wears.

12. The torque tuning method according to claim 11, wherein the axial center of the ball stud is swung in addition to high-speed rotation of the ball stud.

13. A ball joint comprising: a ball stud formed by integrally joining a metal spherical portion to another end portion of a stud portion having one end portion connected to a structure body; a resin housing supporting the spherical portion of the ball stud swingably and rotatably, and having a space where one side is open; and a resin support member interposed between the housing and the spherical portion, in which the spherical portion covered by the support member is included in the housing, wherein

a tightening margin between the support member and the spherical portion is largest at a diameter portion of the spherical portion perpendicular to an axial direction of the ball stud at a center of the spherical portion, and is smaller as it goes away in the axial direction from the diameter portion.

FIG. 1

FIG. 2

# FIG. 3

HIGH-
FREQUENCY
INDUCTION
HEATING
APPARATUS

20

24

1a

10a1

10

11

10s

# FIG. 4

DIAMETER OF OBJECT TO BE HEATED

EDDY CURRENT DENSITY DISTRIBUTION

1.0
0.9
0.8
0.7
0.6
0.5
0.368 0.4
0.3
0.2
0.1

0
SURFACE

δ

DEPTH FROM
SURFACE

CENTER

DEPTH FROM
SURFACE

δ

0
SURFACE

δ : CURRENT PENETRATION DEPTH

FIG. 5

EP 3 406 921 A1

## FIG. 6

## FIG. 7

HIGH-FREQUENCY INDUCTION HEATING APPARATUS — 20

## FIG. 8A

## FIG. 8B

# FIG. 9

# FIG. 10

# FIG. 11

## INTERNATIONAL SEARCH REPORT

| | International application No. |
|---|---|
| | PCT/JP2017/001409 |

### A. CLASSIFICATION OF SUBJECT MATTER
*F16C11/06*(2006.01)i, *H05B6/06*(2006.01)i, *H05B6/10*(2006.01)i, *H05B6/36*(2006.01)i, *H05B6/44*(2006.01)i, *B60G7/02*(2006.01)n

According to International Patent Classification (IPC) or to both national classification and IPC

### B. FIELDS SEARCHED

Minimum documentation searched (classification system followed by classification symbols)
F16C11/06, H05B6/06, H05B6/10, H05B6/36, H05B6/44, B60G7/02

| Documentation searched other than minimum documentation to the extent that such documents are included in the fields searched | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2012/133643 A1 (Musashi Seimitsu Industry Co., Ltd.), 04 October 2012 (04.10.2012), paragraphs [0026], [0041] to [0042], [0047] to [0050], [0057], [0058], [0061] & JP 5975531 B & CN 103459864 A | 1-9,13 |
| X | JP 62-88815 A (Musashi Seimitsu Industry Co., Ltd.), 23 April 1987 (23.04.1987), page 2, upper left column, lines 3 to 10; lower left column, line 19 to lower right column, line 5; fig. 1 (Family: none) | 10-12 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 April 2017 (12.04.17) | 25 April 2017 (25.04.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**EP 3 406 921 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011247338 A